# EUROPEAN PATENT SPECIFICATION

(11) **EP 1 000 381 B1**
(45) Date of publication and mention of the grant of the patent: **26.11.2003**
(21) Application number: 98939611.4
(22) Date of filing: 03.07.1998
(51) Int. Cl.: G02F 1/125

(54) **ACOUSTO-OPTIC DEVICES HAVING AN ACOUSTIC ATTENUATOR STRUCTURE**
AKUSTO-OPTISCHE VORRICHTUNGEN MIT AKUSTISCHEM ABSORBER
DISPOSITIFS ACOUSTO-OPTIQUES PRESENTANT UNE STRUCTURE D'ATTENUATEUR ACOUSTIQUE

(30) Priority: 31.07.1997 EP 97113188; 05.08.1997 US 54818 P
(43) Date of publication of application: 17.05.2000
(73) Proprietor: Corning O.T.I. SRL, 20126 Milano (IT)
(72) Inventor: SCHMID, Steffen, D-68753 Waghaeusel-Kirrlach (DE)
(74) Representative: Poole, Michael John
(86) International application number: EP9804109
(87) International publication number: WO99006876

(56) References cited:
- EP-A- 0 737 880
- GB-A- 2 304 917
- US-A- 5 002 349
- CHAKRAVARTHY R S ET AL: "PASSBAND ENGINEERING OF ACOUSTO-OPTIC TUNABLE FILTERS" PROCEEDINGS EUROPEAN CONFERENCE ON INTEGRATED OPTICS WITH TECHNICAL EXHIBIT, 3 April 1995, pages 137-140, XP000197994 cited in the application
- SMITH D A ET AL: "ACOUSTO-OPTIC SWITCH WITH A NEAR RECTANGULAR PASSBAND FOR WDM SYSTEMS" ELECTRONICS LETTERS, vol. 32, no. 6, 14 March 1996, page 542/543 XP000593623

## Description

### Background of the Invention

The present invention relates generally to acousto-optic devices, and more particularly to absorbing surface acoustic waves in acousto-optic devices.

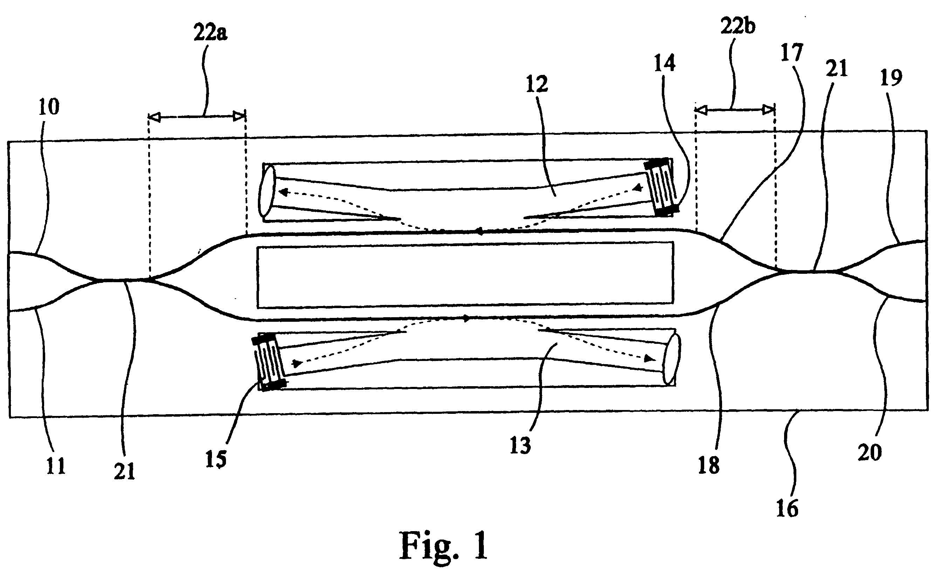

Integrated acousto-optic devices function through the interaction of surface acoustic waves (SAWs) on a crystal surface with light traversing the crystal. An example of an acousto-optic device is shown in Fig. 1. The device is a 2 x 2 tunable optic switch having optical waveguides 10, 11, 17, 18, 19, and 20, with two bending sections 22a and 22b along a region of optical waveguides 17 and 18. The device also has acoustic waveguides 12 and 13, piezoelectric transducers 14 and 15, and polarization splitters 21. The device is formed on the surface of a crystal 16, such as LiNbO₃. When electrically stimulated, transducers 14 and 15 produce SAWs that travel through acoustic waveguides 12 and 13 and interact with light passing through optical waveguides 17 and 18.

The inventor has recognized, however, that non-ideal behavior of the SAW gives rise to parasitic effects. First, the SAW may be scattered due to inhomogeneities on the surface of the crystal. Inhomogeneities can be caused, for example, by indiffusion of dopants, surface impurities, additional surface layers, or by the borders of the substrate. The scattered SAW disturbs the acousto-optic interaction between the SAW and the light traveling through the waveguides.

The SAW can be scattered, or it can be reflected by the inhomogeneities, or by the acoustic waveguides. Scattered or reflected acoustic waves can interfere with other acoustic waves. The resulting interference pattern changes with the wavelength of the SAW resulting in wavelength dependent characteristics of the acousto-optic device.

Further, the structure that generates the SAW (e.g., piezoelectric transducers 14 and 15 of Fig. 1) does not necessarily generate directed waves. Rather, the waves irradiate in various directions, degrading device performance.

Other problems associated with conventional acousto-optic devices include internal reflections of the transducer that result in fluctuations of transducer efficiency with frequency. Also, waves propagating inside the substrate ("bulk-waves") can interfere with those propagating on the surface.

Finally, in acousto-optic devices like the one shown in Fig. 1, a coupling between acoustic waveguides 12 and 13 may develop. If such coupling develops, the efficiency of both converters is decreased. To function effectively, then, the waveguides 12 and 13 must be separated by a relatively large distance (typically 200 microns). This required separation limits the degree to which the devices can be integrated.

U.S. Patent No. 5,002,349 discusses the integration of acousto-optic filters and switches. The objects of the invention are to provide an efficient acousto-optic structure on an x-cut piezoelectric substrate and to provide an acousto-optic filter and coupler that do not incur an optical frequency shift and that are polarization independent. To achieve these objects, the invention includes a two-stage acousto-optic filter fabricated as an integrated circuit with an acoustic absorber between the two stages.

European Patent Application EP 0737880A1 discusses an acoustooptical waveguide device for wavelength selection. As shown in Fig. 4, the device includes an acoustic absorbing means placed along an acoustic waveguide 41, close to the end of optical waveguide 36 that is connected to coupler 37 to absorb the residual acoustic wave. it also includes an acoustic absorbing means placed close to the end of waveguide 34 that is connected to coupler 32 to absorb the acoustic wave generated by transducer 44 propagating in a direction opposite to the optical signals.

UK Patent Application (Publication No. GB 2,304,917) entitled "Integrated Optical Devices" discloses a tunable filter having an acoustic waveguide parallel to an optical waveguide. The application discloses two methods of controlling the power density of an advancing acoustic wave and, thus, the power transfer to the optical wave. First, the acoustic waveguide can have a varying cross-sectional area. Second, the energy of the acoustic wave can be absorbed along the length of the acoustic waveguide.

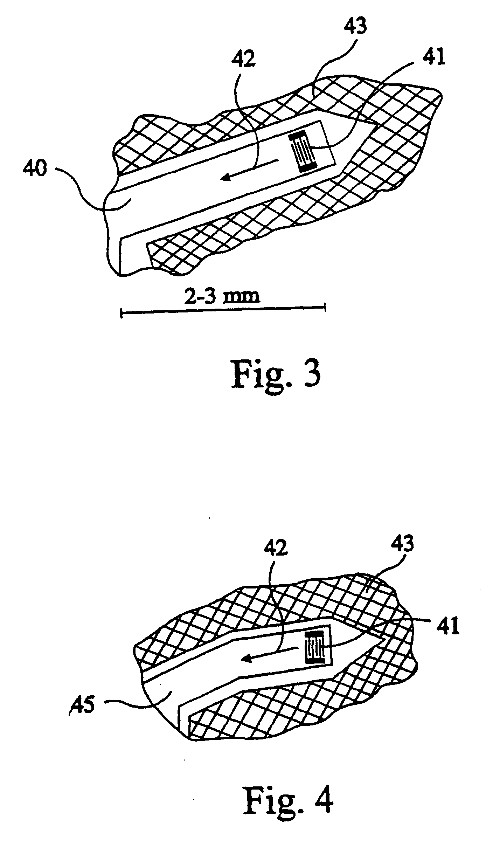

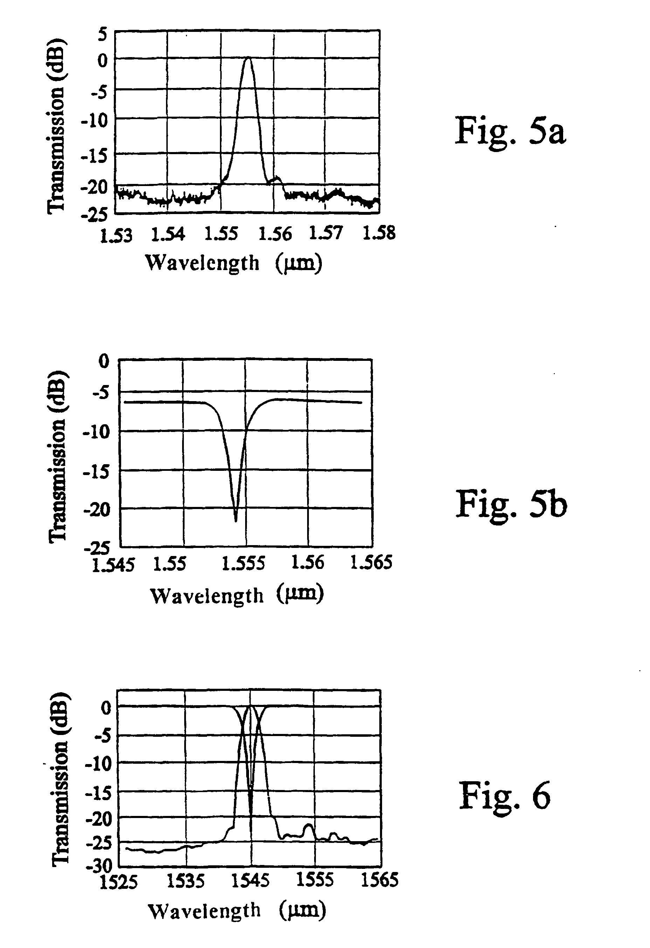

Finally, a publication entitled "Passband Engineering of Acousto-Optic Tunable Filters" by R.S. Chakravarthy et al. (1995 ECIO Proceedings, paper TuPo, Poster Session, p. 137-40) investigates solutions to the problems of interchannel crosstalk and wavelength misalignment crosstalk in acousto-optic tunable filters. The authors propose, among other things, placing an attenuating overlay symmetrically along the length of the device taking care to avoid the optical waveguides. The device structure is shown in Figs. 4(a) and 5(a).

The features of the preamble of claim 1 are known from that document.

The inventor has discovered that these techniques do not solve the problems recognized by the inventor. The inventor has found a need, therefore, for an acousto-optic device that reduces the parasitic effects of surface acoustic waves.

### SUMMARY OF THE INVENTION

We have found that an acoustic absorber placed at predetermined locations around the acoustic waveguides and the optical waveguides acts to reduce or eliminate the problem created by the above-described parasitic effects.

In accordance with the invention, an acousto-optic device comprises:
a substrate (26) of a material capable of propagating a surface acoustic wave along a surface of the substrate;
a first optical waveguide (32) formed in the substrate;
a first acoustic waveguide (23) formed in the substrate, the first optical waveguide and the first acoustic waveguide forming an acousto-optic interaction region;
a first transducer (25, 41) for generating a surface acoustic wave in the first acoustic waveguide;
and further comprises an acoustic absorber (27) surrounding first acoustic waveguide, the material used for the acoustic absorber having a high acoustic attenuation coefficient high enough to suppress the effects caused by scattering and reflection of irradiated acoustic waves in a substrate region surrounding the first acoustic waveguide.

A method consistent with the present invention includes the steps of providing a substrate having an optical waveguide and an acoustic waveguide formed therein, wherein the optical waveguide and the acoustic waveguide form an acousto-optic interaction region, and absorbing scattered acoustic waves in a region surrounding the acousto-optic interaction region.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are incorporated in and constitute a part of the specification, illustrate presently preferred implementations of the invention and, together with the general description given above and the detailed description of the preferred implementations given below, serve to explain the principles of the invention.
Fig. 1 is a drawing of a typical 2 x 2 acousto-optic switch;
Fig. 2 is a drawing of a 2 x 2 acousto-optic switch consistent with the present invention;
Fig. 3 is a drawing of a region surrounding the transducer of Fig. 2 according to one embodiment of the invention;
Fig. 4 is a drawing of a region surrounding the transducer of Fig. 2 according to another embodiment of the invention;
Fig. 5a is a drawing of the filter characteristic of a typical 2 x 2 acousto-optic switch without acoustic absorbers.
Fig. 5b is a drawing of the notch characteristic of a typical 2 x 2 acousto-optic switch without acoustic absorbers;
Fig. 6 is a drawing of the filter and notch characteristics of a 2 x 2 acousto-optic switch consistent with the present invention;
Fig. 7 is a drawing of acoustic power distribution in an acousto optic device without acoustic absorbers; and
Fig. 8 is a drawing of acoustic power distribution in an acousto optic device with acoustic absorbers.

### DETAILED DESCRIPTION

Reference will now be made in detail to the construction and operation of preferred implementations of the present invention which are illustrated in the accompanying drawings.

The following description of the preferred implementations of the present invention is only exemplary of the invention. The present invention is not limited to these implementations, but may be realized by other implementations.

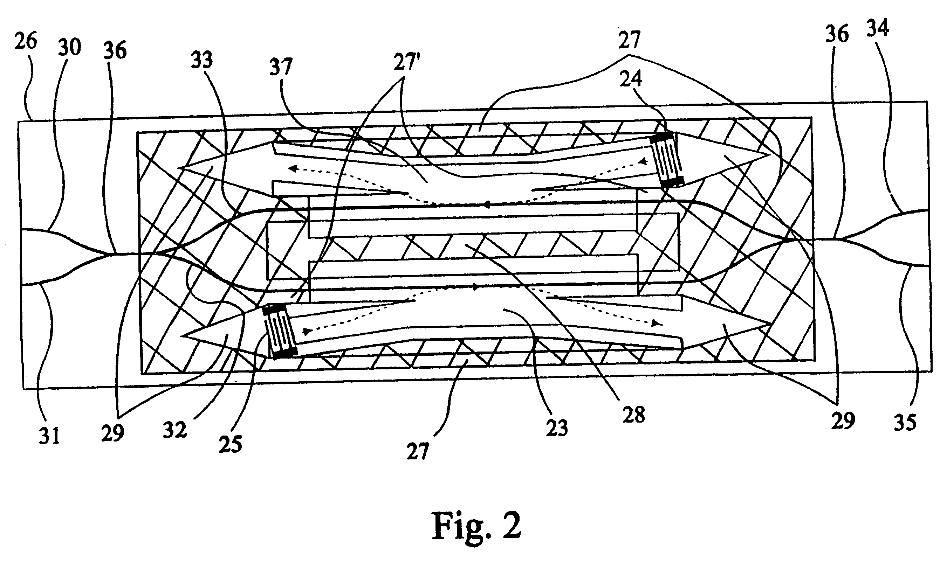

An acousto-optic device consistent with the present invention is shown in Fig. 2. In this embodiment, the device is a 2 x 2 tunable optic switch having optical waveguides 30, 31, 32, 33, 34 and 35, polarization splitters 36, acoustic waveguides 23 and 37, and piezoelectric transducers 24 and 25. The device is formed on the surface of a crystal 26, such as LiNbO₃. The device is modified in the following ways to minimize the parasitic effects of the SAWs generated by transducers 24 and 25.

First, the entire acousto-optic conversion region is surrounded by an acoustic absorber 27, thus suppressing the effects caused by scattering and/or reflection of irradiated waves.

In a different embodiment, not shown, each acousto-optic conversion region is surrounded by a separate acoustic absorber.

Second, acoustic absorber 27' is placed near transducers 24 and 25 to absorb radiated waves emitted from the transducers but not coupled to the waveguides.

Also, a stripe 28 of acoustic absorber is placed between acoustic waveguides 23 and 37. Preferably, stripe 28 is approximately 50 microns wide. It serves to reduce the acoustical crosstalk between the convertors, enhancing the conversion efficiency. This enhanced isolation between the convertors can be used to reduce the gap between them, thus decreasing the overall device size, allowing for a higher degree of integration, and improving the device characteristics.

The acoustic absorber is also used close to the end of acoustic waveguides 23 and 37 to include a V-shaped structure 29 behind transducers 24 and 25. The structure 28 absorbs acoustic waves generated in that direction. The structure 29, used in conjunction with the acoustic absorber placement described above, has a number of advantages. First, there is a more distributed absorption of the SAW, resulting in less local heating. Second, since structure 29 absorbs some of the acoustic waves, the acoustic absorber is mechanically less stressed by the acoustic wave. Preferably, the ends of acoustic waveguides 23 and 37 opposite transducers 24 and 25 are also surrounded by a V-shaped absorbing structure, resulting in similar advantages to those discussed above. Although a V-shaped structure 29 is shown, any geometry suitable to a desired distribution of absorbed energy and heat may be used.

The inventor has further recognized that the irradiation of acoustic waves along directions other than the direction of the acoustic waveguide (i.e., unguided acoustic waves) takes place not only from the transducer itself, but also from a portion further down the acoustic waveguide where the SAW is stronger. Figs. 3 and 4 show two structures that limit irradiation from this portion by increasing the length of the acoustic waveguide. Fig. 3 shows an acoustic waveguide 40 having a transducer 41 forming a SAW 42 along acoustic waveguide 40. Acoustic waveguide 40 is surrounded by an acoustic absorber 43. To limit irradiation of acoustic energy from a portion down acoustic waveguide 40 from transducer 41, acoustic waveguide 40 is extended by 2-3 mm.

The extension of acoustic waveguide 40, however, has the effect of increasing the overall device size. Therefore, in the embodiment shown in Fig. 4, acoustic waveguide 45 is extended, but also bent toward the center of the device. Although a small acoustic loss of about 0.5 dB can be expected due to the bend, the size of the device is not changed. As with the structure shown in Fig. 3, the structure of Fig. 4 also has the effect of limiting the irradiation of unguided acoustic waves emanating from the SAW 42 at a portion down acoustic waveguide 45 from transducer 41.

To maximize the effectiveness of the acoustic absorber used in the acousto-optic device, the material used for the acoustic absorber should possess certain characteristics. it should have, for example, a high acoustic attenuation coefficient to allow for efficient isolation of neighboring structures, and small reflectivity to avoid interference effects. It should also be easy to fabricate, resist heat, and maintain its characteristics over the life of the device. Polyimides, one of a large family of polymers, satisfy these requisites due to their basic chemical structure. Polyimides are commercially available from Ciba-Geigy, such as in the Probimide 400 and 7000 series.

Further, additives can be added to polyimides making them photosensitive. Thus, the polyimides act as a photoresist and can be deposited on the acousto-optic device by simple means of microlithography. Specifically, we have found that Probimide 408 and 7020 possess particularly advantageous properties for use as acoustic absorbers. When deposited in the pattern described above at a thickness of 20 microns, polyimides exhibit an attenuation coefficient of approximately 23 dB/mm at a frequency of approximately 170 MHz. This measurement was taken with the absorber oriented at a right angle to the acoustic waves.

Referring to Fig. 2, using a 50 micron wide stripe 28 along the separating gap reduces the acoustic crosstalk between the convertors from -15 dB to less than -25 dB, resulting in increased conversion efficiency. This measurement was taken with the absorber oriented parallel to the acoustic wave. The enhanced isolation can also be used to shorten the gap between the convertors. Experiments show that the gap can be reduced by at least 25 percent (from 170 microns to 130 microns). Also, the length of the bending section can be shortened by approximately 20 percent (from 8 mm to 6.5 mm). The benefits of this shortened length are multiplied when double stage devices are used. As discussed above, the shortened gap and bending section length lead to increased integration of the acousto-optic devices.

Fig. 5a shows the filter characteristic of a 2 x 2 acousto-optic switch without acoustic absorbers. The filter has a peak of approximately 22 dB above the noise floor. Fig. 5b shows the notch characteristic for the 2 x 2 switch without acoustic absorbers. The notch extinction is approximately 17 dB. Fig. 6, on the other hand, shows the filter and notch characteristics for a 2 x 2 switch with acoustic absorbers. The filter characteristic has a peak of approximately 25 dB above the noise floor, while the notch extinction has improved to approximately 22 dB. The side lobes have been reduced from -18 dB to approximately -22 dB, and the crosstalk has been reduced to below -25 dB.

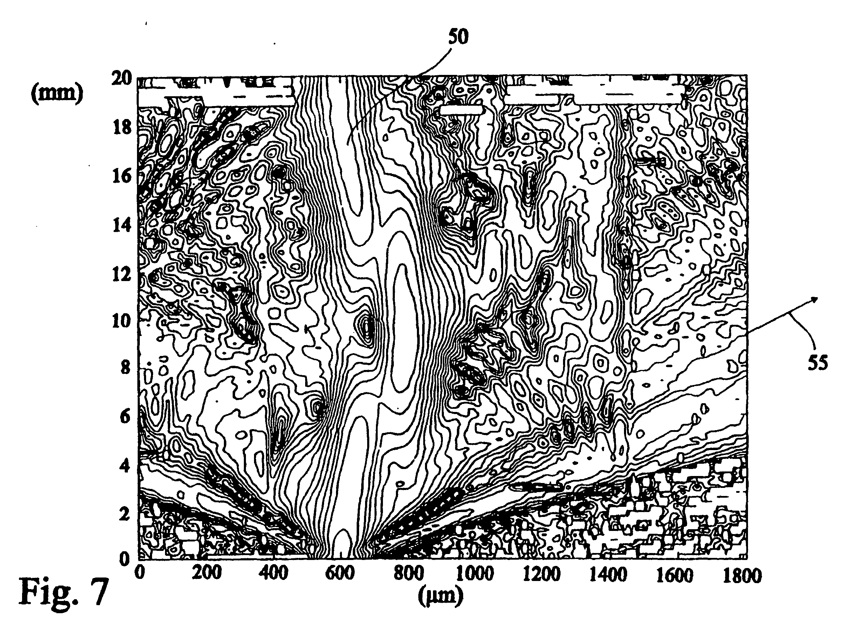

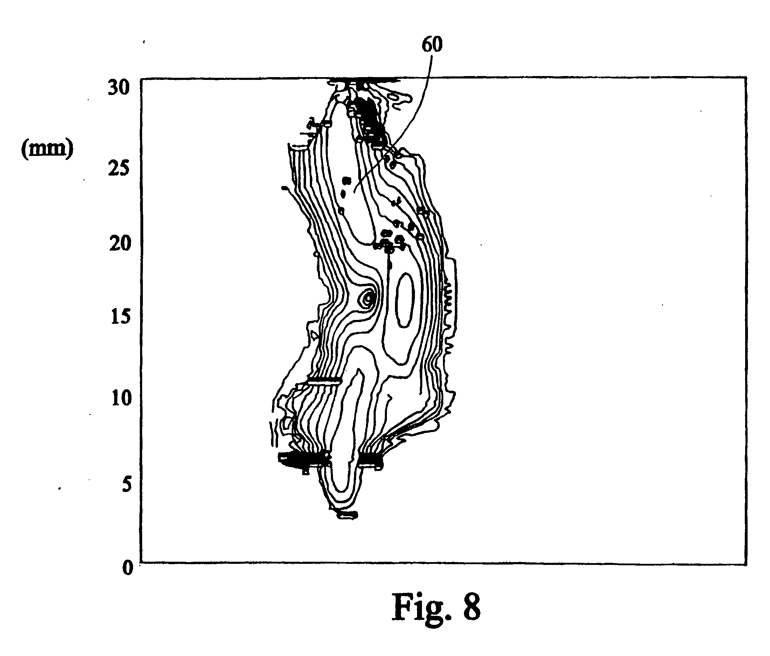

Fig. 7 shows the acoustic propagation in an acousto optic device without the acoustic absorbers. The propagation is not confined to the acoustic waveguide 50, but rather irradiates throughout the device. These irradiated and unguided waves, such as those along line 55, propagate across the optical waveguide and interfere with acousto optic conversion. Fig. 8, in contrast, shows the same device using the teaching of the present invention. Unlike in Fig. 7, the acoustic propagation is largely confined to the acoustic waveguide 60, enhancing the overall efficiency of the device.

While there has been illustrated and described what are at present considered to be preferred embodiments of the present invention, it will be understood by those skilled in the art that various changes and modifications may be made, without departing from the true scope of the invention as defined in the following claims. For example, other materials, such as silicon, may possibly be used as the acoustic absorber in the place of polyimides.

In addition, many modifications may be made to adapt a particular element, technique or implementation to the teachings of the present invention without departing from the central scope of the invention. Therefore, it is intended that this invention not be limited to the particular embodiments disclosed herein, but that the invention includes all embodiments falling within the scope of the appended claims.

## Claims

1. An acousto-optic device comprising:
a substrate (26) of a material capable of propagating a surface acoustic wave along a surface of the substrate;
a first optical waveguide (32) formed in the substrate;
a first acoustic waveguide (23) formed in the substrate, the first optical waveguide and the first acoustic waveguide forming an acousto-optic interaction region;
a first transducer (25, 41) for generating a surface acoustic wave in the first acoustic waveguide; and an acoustic absorber (27);
**characterized in that** the acoustic absorber (27) surrounds the first acoustic waveguide, the material used for the acoustic absorber has a high acoustic attenuation coefficient high enough to suppress the effects caused by scattering and reflection of irradiated acoustic waves in a substrate region surrounding the first acoustic waveguide.

2. The acousto-optic device of claim 1 wherein the substrate material is LiNbO3.

3. The acousto-optic device of claim 1 wherein the acoustic absorber contains polyimides.

4. The acousto-optic device of claim 1 further including an acoustic absorber (27') placed near the first transducer.

5. The acousto-optic device of claim 1 having an end acoustic absorber (29; 43) placed near an end of the acoustic waveguide, said end absorber being of a shape to absorb acoustic energy.

6. The acousto-optic device of claim 5 wherein said end absorber has a V-shape.

7. The acousto-optic device of claim 1 wherein there are two optical waveguides (32, 33).

8. The acousto-optic device of claim 7 further including a strip of acoustic absorber (28) disposed between the two optical waveguides.

9. The acousto-optic device of claim 8 wherein the strip of acoustic absorber is at least 50 microns wide.

10. The acousto-optic device of claim 1 wherein an end (42, 45) of the first acoustic waveguide containing the transducer is extended by at least 2 mm.

11. The acousto-optic device of claim 10 wherein the end of the first extended acoustic waveguide (45) is bent.

12. The acousto-optic device of claim 1 further including:
a second optical waveguide (33) formed in the substrate;
a second acoustic waveguide (37) contacting the second optical waveguide,
a second transducer (24, 49) for generating a surface acoustic wave in the second acoustic waveguides, and wherein the acoustic absorber (27) surrounds the first and second acoustic waveguides.

13. The acousto-optic device of claim 12 further including:
a strip of acoustic absorber (28) disposed between the first and second acoustic waveguides.

14. The acousto-optic device of claim 13 wherein
the strip of acoustic absorber is at least 50 microns wide.

## Patentansprüche

1. Eine akustooptische Vorrichtung, welche aufweist:
ein Substrat (26) eines Materials, welches zum Ausbreiten einer akustischen Oberflächenwelle entlang einer Oberfläche des Substrats geeignet ist;
einen ersten optischen Wellenleiter (32), welcher in dem Substrat gebildet ist;
einen ersten akustischen Wellenleiter (23), welcher in dem Substrat gebildet ist, wobei der erste optische Wellenleiter und der erste akustische Wellenleiter ein Gebiet
akustooptischer Wechselwirkung bilden;
einen ersten Wandler (25, 41) zum Erzeugen einer akustischen Oberflächenwelle in dem ersten akustischen Wellenleiter; und
einen akustischen Absorber (27);
**dadurch gekennzeichnet, dass** der akustische Absorber (27) den ersten akustischen Wellenleiter umschließt, wobei das Material, welches für den akustischen Absorber genutzt wird, einen hohen akustischen Dämpfungskoeffizienten besitzt, groß genug, um die Effekte zu unterdrücken, welche durch Streuen und Reflexion der abgestrahlten akustischen Wellen in einem Substratbereich verursacht werden, welcher den ersten akustischen Wellenleiter umschließt.

2. Akustooptische Vorrichtung nach Anspruch 1, wobei das Substratmaterial LiNbO₃ ist.

3. Akustooptische Vorrichtung nach Anspruch 1, wobei der akustische Absorber Polyimide enthält.

4. Akustooptische Vorrichtung nach Anspruch 1, welche ferner einen akustischen Absorber (27') beinhaltet, welcher nahe dem ersten Wandler platziert ist.

5. Akustooptische Vorrichtung nach Anspruch 1, welche einen akustischen Endabsorber (29; 43) besitzt, welcher nahe einem Ende des akustischen Wellenleiters platziert ist, wobei der Endabsorber eine Form besitzt, um akustische Energie zu absorbieren.

6. Akustooptische Vorrichtung nach Anspruch 5, wobei der Endabsorber eine V-Form besitzt.

7. Akustooptische Vorrichtung nach Anspruch 1, wobei es zwei optische Wellenleiter (32, 33) gibt.

8. Akustooptische Vorrichtung nach Anspruch 7, welche ferner einen Streifen eines akustischen Absorbers (28) beinhaltet, welcher zwischen den zwei optischen Wellenleitern angeordnet ist.

9. Akustooptische Vorrichtung nach Anspruch 8, wobei der Streifen des akustischen Absorbers wenigstens 50 µm breit ist.

10. Akustooptische Vorrichtung nach Anspruch 1, wobei ein Ende (42, 45) des ersten akustischen Wellenleiters, welcher den Wandler enthält, sich wenigstens über 2 mm erstreckt.

11. Akustooptische Vorrichtung nach Anspruch 10, wobei das Ende des ersten ausgedehnten Wellenleiters (45) gebogen ist.

12. Akustooptische Vorrichtung nach Anspruch 1, welche ferner beinhaltet:
Einen zweiten optischen Wellenleiter (33), welcher in dem Substrat gebildet ist;
einen zweiten akustischen Wellenleiter (37), welcher den zweiten optischen Wellenleiter berührt,
einen zweiten Wandler (24, 49) zum Erzeugen einer akustischen Oberflächenwelle in den zweiten akustischen Wellenleitern und wobei der akustische Absorber (27) die ersten und zweiten akustischen Wellenleiter umschließt.

13. Akustooptische Vorrichtung nach Anspruch 12, welcher ferner beinhaltet:
Einen Streifen eines akustischen Absorbers (28), welcher zwischen dem ersten und zweiten akustischen Wellenleiter angeordnet ist.

14. Akustooptische Vorrichtung nach Anspruch 13, wobei der Streifen des akustischen Absorbers wenigstens 50 µm breit ist.

## Revendications

1. Dispositif acousto-optique comprenant :
un substrat (26) en un matériau permettant de propager une onde acoustique de surface le long d'une surface du substrat ;
un premier guide d'ondes optique (32) qui est formé dans le substrat ;
un premier guide d'ondes acoustique (23) qui est formé dans le substrat, le premier guide d'ondes optique et le premier guide d'ondes acoustique formant une région d'interaction acousto-optique ;
un premier transducteur (25, 41) pour générer une onde acoustique de surface dans le premier guide d'ondes acoustique ; et
un absorbeur acoustique (27),
caractérisé er ce que l'absorbeur acoustique (27) entoure le premier guide d'ondes acoustique, le matériau utilisé pour l'absorbeur acoustique présente un coefficient d'atténuation élevé qui est suffisamment élevé pour atténuer les effets générés par la diffusion et la réflexion d'ondes acoustiques irradiées dans une région de substrat entourant le premier guide d'ondes acoustique.

2. Dispositif acousto-optique selon la revendication 1, dans lequel le matériau de substrat est du LiNbO₃.

3. Dispositif acousto-optique selon la revendication 1, dans lequel l'absorbeur acoustique contient des polyimides.

4. Dispositif acousto-optique selon la revendication 1, incluant en outre un absorbeur acoustique (27') qui est placé à proximité du premier transducteur.

5. Dispositif acousto-optique selon la revendication 1, comportant un absorbeur acoustique d'extrémité (29 ; 43) qui est placé à proximité d'une extrémité du guide d'ondes acoustique; ledit absorbeur d'extrémité étant d'une forme permettant d'absorber l'énergie acoustique.

6. Dispositif acousto-optique selon la revendication 5, dans lequel ledit absorbeur d'extrémité présente une forme en V.

7. Dispositif acousto-optique selon la revendication 1, dans lequel il y a deux guides d'ondes optiques (32, 33).

8. Dispositif acousto-optique selon la revendication 17, incluant en outre une bande d'absorbeur acoustique (28) qui est disposée entre les deux guides d'ondes optiques.

9. Dispositif acousto-optique selon la revendication 8, dans lequel la bande d'absorbeur acoustique est d'une largeur d'au moins 50 micromètres.

10. Dispositif acousto-optique selon la revendication 1, dans lequel une extrémité (42, 45) du premier guide d'ondes acoustique contenant le transducteur est étendue sur au moins deux millimètres.

11. Dispositif acousto-optique selon la revendication 10, dans lequel l'extrémité du premier guide d'ondes acoustique étendue (45) est fléchie.

12. Dispositif acousto-optique selon la revendication 1, incluant en outre :
un second guide d'ondes optique (33) qui est formé dans le substrat ;
un second guide d'ondes acoustique (37) qui est en contact avec le second guide d'ondes optique ;
un second transducteur (24, 49) pour générer une onde acoustique de surface dans le second guide d'ondes acoustique et dans lequel l'absorbeur acoustique (27) entoure les premier et second guides d'ondes acoustiques.

13. Dispositif acousto-optique selon la revendication 12, incluant en outre :
une bande d'absorbeur acoustique (28) qui est disposée entre les premier et second guides d'ondes acoustiques.

14. Dispositif acousto-optique selon la revendication 13, dans lequel la bande d'absorbeur acoustique est d'une largeur d'au moins 50 micromètres.
